# EUROPEAN PATENT SPECIFICATION

(11) **EP 1 561 181 B1**
(45) Date of publication and mention of the grant of the patent: **07.05.2008**
(21) Application number: 03811469.0
(22) Date of filing: 14.08.2003
(51) Int. Cl.: G06Q 30/00

(54) **SYSTEM FOR STOCK IMAGES PEER-TO-PEER SERVICES OVER THE WORLD WIDE WEB**
SYSTEM FÜR ARCHIVBILDER-PEER-TO-PEER-DIENSTE ÜBER DAS WORLD WIDE WEB
SYSTEMES DE STOCKAGE D'MAGES PROVENANT DE SERVICES POSTE-A-POSTE SUR LE WEB

(30) Priority: 15.11.2002 US 426351 P
(43) Date of publication of application: 10.08.2005
(73) Proprietor: Kodak IL Ltd., 46103 Herzlia (IL)
(72) Inventor: LIPOWITZ, Shay, 53327 Givatayim (IL); BEERY, Ron, 52372 Ramat Gan (IL); GELBENDORF, Hanan, New York NY 10029 (US)
(74) Representative: White, Duncan Rohan
(86) International application number: PCT/IL2003/000674
(87) International publication number: WO 2004/046982

(56) References cited:
- EP-A- 0 878 956
- EP-A- 0 982 668
- EP-A- 1 139 244
- EP-A- 1 158 461
- WO-A-01/41018
- US-A1- 2002 019 743

## Description

### FIELD AND BACKGROUND OF THE INVENTION

The invention relates to the acquisition of digital stock images used in the graphic arts industry over Peer-to-Peer networks. In particular, obtaining selected digital stock images directly from their originators using the Internet services.

### GLOSSARY

The following terms are defined in the web site: http://www.webopedia.com/
*Color Space -* A multi-dimensional geometric representation of the colors that can be seen and/or generated using a certain color model
*Color Matching* - The process of assuring that a color on one medium remains the same when converted to another medium. This is extremely difficult because different media use different color models. Color monitors, for example, use the RGB model, whereas process printing uses the CMYK model
*Metadata -* Data about data. Metadata describes how and when and by whom a particular set of data was collected, and how the data is formatted
*IP Address -* An identifier for a computer or device on a TCP/IP network
*Web-server -* A computer that delivers (*serves up*) Web pages. Every Web server has a fixed IP address and possibly a domain name
*Peer-to-Peer network -* A type of network in which each workstation has equivalent capabilities and responsibilities. In particular, each workstation has a temporary IP address through which it communicates.

The following terms were taken from:
http://graphicssoft.about.com/library/glossary/bldefresolution.htm
*Thumbnail (or Icon) -* a "*Thumbnail* " is a small graphic image that is usually used as a link to either a larger version of that image or to another web site. The image used for the *Thumbnail* needs to be reduced and resized to a smaller graphic for a quicker download of your web page. The viewer then has the option to click on the *Thumbnail* if they want to see the larger picture, which will take longer to download, or if they want to visit another site that it is linked to.
*Resolution -* resolution is a measurement of the output quality of an image, usually in terms of samples, pixels, dots, or lines per inch. The terminology varies according to the intended output device. PPI (pixels per inch) refers to screen resolution, DPI (dots per inch) refers to print resolution, SPI (samples per inch) refers to scanning resolution, and LPI (lines per inch) refers to halftone resolution.

Often images are referred to as high-resolution (hi-res) or low-resolution (low-res). High-resolution refers to an image intended for print, generally having 300 samples per inch or more. Low-resolution refers to images only intended for screen display, generally having 100 pixels per inch or less.

We have broadened the above definition:
*Low-res Image -* is a graphic image that is scaled down for various purposes; preview in an imaging application, hi-res representation for page layout applications or hi-res representation for web usages. It has 2 main forms:
   1. An image scaled down to a fixed resolution, typically 72 or 144 dpi
   2. An image scaled down to a specific screen size typically 600 X 800 or 768 X 1024.
*Hi-res Image -* a graphic image in a digital form that contains all the necessary data for its final use; appropriate resolution, color depth and input profile (color model), i.e. if additional transformations are required in order to convert the image to its final output form, then all necessary input for these transformation is stored within the image.

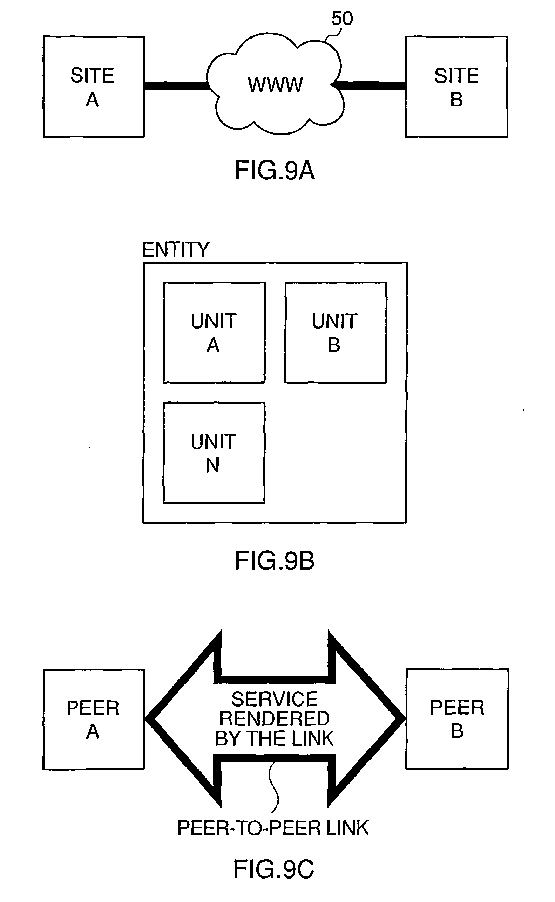

The following terms are defined for the purpose of this application (note Fig. 9):
*Link* (Fig. 9A) - at least two entities (for example site A and site B) connected (communication wise) by the Internet 50 or other communication link.
*Action* - an operation (e.g. searching data, transferring data, purchasing goods, paying for merchandise) executed via a *link. Actions* will be symbolized by numbers next to the specific *action,* for example "search 95".
*Entity* (Fig. 9B) - an *entity* (for example: Image Bank) includes one or more operational units (for example: a PC, storage device). The interconnections and mode of operation of the *entity* are known in the art.
*Peer to Peer Link* (Fig. 9C) - An Internet 50 or other communication link connection between two or more Peers. Note also: *Peer-to-Peer network.*

Digital stock images are widely used over the Internet. A common use of these images in the Graphics Arts industry is described below:
Designers, who design a page, look for a specific image to be inserted in that page layout. This image can be specially originated for this occasion or can be searched for in repositories for stock images. These repositories, often called Image Banks, are widely used over the World Wide Web, for example, Getty Images of Seattle, Washington. The designer who looks for an image in an Image Bank can view a small representation of the image. If the designer is pleased with this image, he or she negotiates with the Image Bank the price of the full-resolution image. The price depends at least on two factors: the image attributes (how rare, how artistic, whether a celebrity, etc.) and the use of the image in the print (size, media type, media circulation, etc.).

The Image Bank service poses several problems:
- In most cases the stock images for use, reside within an Image Bank. Each image requires a large storage capacity, for example: a printed A4 color image in 300 dpi resolution requires about 35 Megabytes of storage.
   Therefore, such a bank needs to allocate many resources in order to store all these images (hardware, disk space, bandwidth). Thus, the price of the stock images for the consumers must be increased.
- Stock images are captured or digitized into the RGB *color space* and are transferred in this format to the users, but images are normally printed after conversion to the CMYK *color space,* (that is, the preparation for print is performed after the transaction was done). In many cases, the *color match* between the original image and the printed image is very poor.
- Since the mediators (image Banks) take a significant commission, the image originators get a small portion of the revenue for each image. Moreover, in many cases they do not get the publicity they may have gotten if they sold the images directly

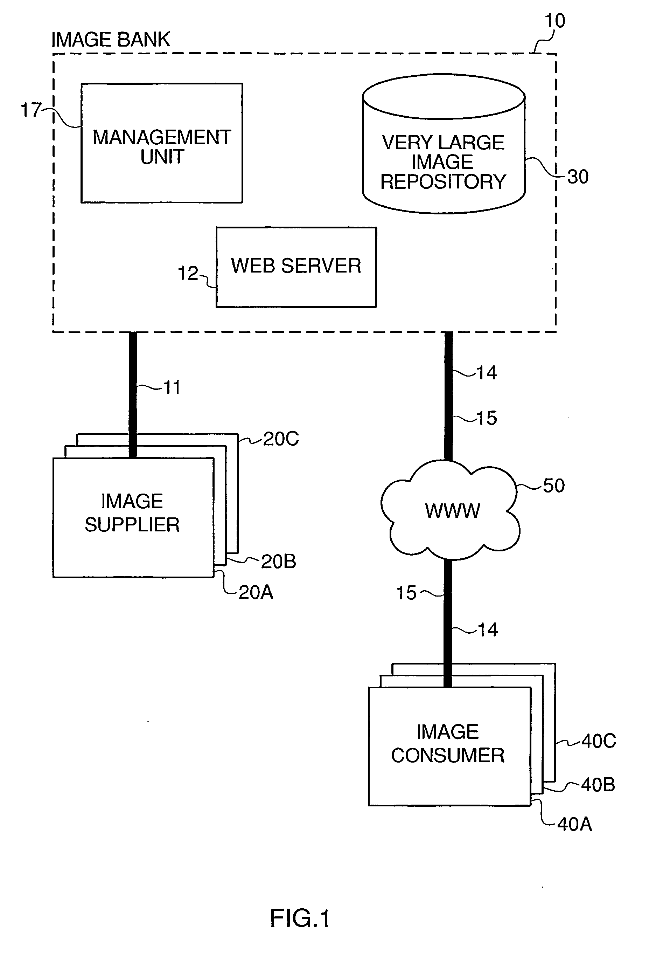

Presently, most of the stock image trading is performed via Image Banks. Figure 1 shows a typical layout and workflow of the current trading mode of stock images.

An Image Bank 10 purchases 11 the original media of an image, e.g. film, via from an Image Supplier 20. The Image Bank 10 then scans the film in-house, stores it in an Image Repository 30, and posts its low-resolution representation on the Image Bank's web server 12 which is located on the Internet (50). Once an Image Consumer 40 is interested in stock images, he or she performs a search 14 in the Image Bank 10 web site. Upon location of an appropriate (low-resolution) image, the Image Consumer 40 initiates a purchasing transaction of the high-resolution image. The Image Bank's Management Unit 17 concludes a transaction and up loads the image from the Image Repository 30, and transfers 15 it via the Internet 50 to the Image Consumer 40.
The main problems with this model are: the Image Consumer 40 pays more than necessary, the Image Supplier 20 does not get her/his fair share in the transaction, the images are not ready for print, and finally the images selected from the web-site are not in full-resolution and therefore the Image Consumer cannot evaluate the image quality before the transaction.

There are other means of stock image trading that are in use. For example, tools that enable the Image Supplier to publish her/his images directly on the Web.

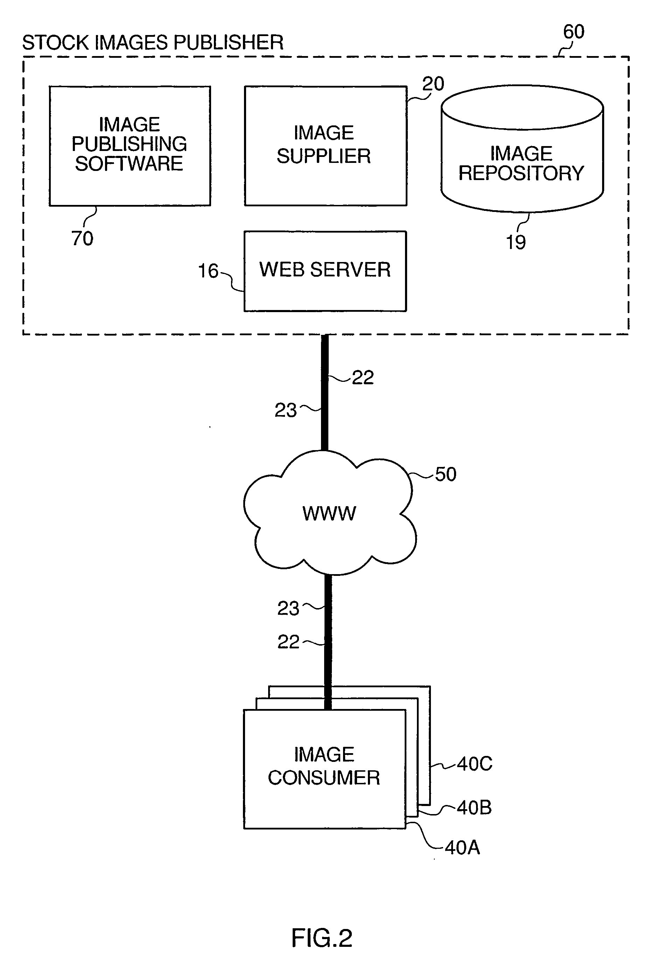

Figure 2 shows this model of stock image trade, having the following typical workflow: The Image Supplier 20 (e.g. the Impressionist or Modern Art section of a museum), puts its images on the Image Repository 19 of the Stock Image Publisher 60 (e.g. the museum) and then publishes them on the museum's web server 16 and the Web 50, using an Image Publishing Software tool 70, for example, FotoWeb by FotoWare of Norway. Once an Image Consumer 40 is interested in a (e.g. art) stock image, she/he performs a search 22 on the Web 50, using any standard search engine, e.g. Google. The Stock Images Publisher 60, is found in this search and the Image Consumer 40 can perform a particular search, negotiate price and retrieve 23 a specific image from the Stock Images Publisher 60 via the Web 50.
The main drawbacks of this model are: the Image Consumer 40 needs to perform a double search, first a search for one or more Stock Images Publisher 60, and a second search for the specific image within the Stock Images Publisher's website. The Stock Images Publisher has a relatively small repository 19 of images and thus the consumer has fewer images to choose from.

The object of this invention is to provide a system and method for trading of digital content, particularly graphic arts images, between image publishers, image buyers and a control and coordination service, all communicating via the Internet or other communication means.

EP-A-1158461 discloses a method for forming, exhibiting and selling images, comprising, receiving a formation request from a requester for forming a first digital image through a network, forming the first digital image based on digital data of an original image, sending a message addressed to the requester and representing that the first digital image has completely been formed, reading the first digital image and providing the requester with the first digital image, and executing a payment process.

EP-A-1139244 discloses a method and system for selling data, comprising retrieving desired data, extracting a part of the data containing a buried electronic watermark, and outputting. A section of the data where the electronic watermark is buried is detected from the data. A charge unit corresponds to the detected electronic watermark information is retrieved from a customer management database, and a charge for use of the picture information is calculated.

The present invention provides a distributed image trading system in accordance with claim 1 below.

In the preferred embodiments of the invention described below, the image publishing module comprises of an image metadata publishing module, an image high-resolution exporting module, and an image price negotiating module, each including further functional units serving the purpose of the system. This image publishing module is downloaded from the service unit to the image publisher upon the first registration of images by the publisher in the service.

In another preferred embodiments of the invention described below the image enhancement unit includes tools for importing low-resolution and high-resolution images, in partial or full format, from the image publisher; tools for evaluating, enhancing, quality checking and selected layout functions, These tools are functional for assisting the image buyer to conclude the purchase of a specific image, basically presented by the service unit as a thumbnail. This image enhancing module is downloaded from the service unit to the image buyer upon the first search initiated by the buyer in the service.

In an alternative embodiment the system service unit includes also an image repository, enabling a different method of operation.

The preferred method of operation described in this invention for the direct purchase of high-resolution images by an image buyer from a specific image publisher comprises: accessing by the buyer the system service unit and searching for the required image by defining desired attributes. Upon location by the service of the attributes in its attributes database, a thumbnail is presented to the image buyer in the service's web-site. A multitude of such thumbnails are pre registered by one or more image publishers in the service with their respective attributes. At the request of the image buyer, a temporary peer-to-peer network connection is established between the buyer and image supplier, and the buyer gets direct access to the low-resolution image file as well as to selected parts of the high-resolution image file. The buyer has now the opportunity to verify and enhance the low-resolution image of each elected thumbnail, quality check selected parts of each respective high-resolution image file and embed the selected images in a page layout. Upon satisfactory termination of the enhancement and quality checks the buyer can purchase the high-resolution image, by negotiating directly with the image supplier the terms of purchase and mode of payment. The payment is done via the billing system of the system's service unit, which can split the payment between eligible parties. The high-resolution image file is consequently transferred from the supplier's repository to the buyer, by means of network downloading, physical transfer of a removable storage media or a transparency. The high-resolution image file is automatically rendered by the buyer's enhancement module to be ready for print, based on the enhancement and quality factors performed at an earlier stage.

In another preferred embodiment the attribute database can be segmented according to known preference of buyers, such as saturated colors, skin tone or ultra high-resolution. These preference factors entail specific conversion of the low-resolution and high-resolution files representing the image.

Certain tools described in this invention are applicable both in the preferred embodiment of the peer-to-peer system or in the prior-art image bank trading method.

### BRIEF DESCRIPTION OF THE DRAWINGS

The invention is herein described, by way of example only, with reference to the accompanying drawings, wherein:
Fig. 1 is a schematic drawing of a typical layout and workflow of the Image Bank trading mode of stock images.
Fig. 2 is a schematic drawing of a typical layout and workflow of the Stock Images Publisher trading mode of stock images.
Fig. 3 is a schematic drawing of a typical layout and inter-unit workflow of the Peer-to Peer operation mode as described in this invention.
Fig. 4 is a schematic drawing of a typical layout and inter-unit workflow of the Peer-to-Peer Service unit and the Image Publisher unit of Fig.3.
Fig. 5 is a schematic drawing of a typical layout and inter-unit workflow of the Peer-to-Peer Service unit and the Image Buyer of Fig.3.
Fig. 6 is a schematic drawing of a typical layout and inter-unit workflow of the Peer-to-Peer Service unit, Image Publisher unit and Graphic Arts buyer unit of Fig.3.
Fig. 7A and Fig. 7B are a schematic block-diagram of a typical operational workflow of the Peer-to-Peer system, as described in this invention.
Fig. 8 is a schematic block-diagram of an alternative workflow of the Peer-to-Peer system, as described in this invention.
Fig. 9A, Fig. 9B, Fig. 9C are schematic representations of certain definitions used in this invention.

### DESCRIPTION OF THE PREFERRED EMBODIMENT

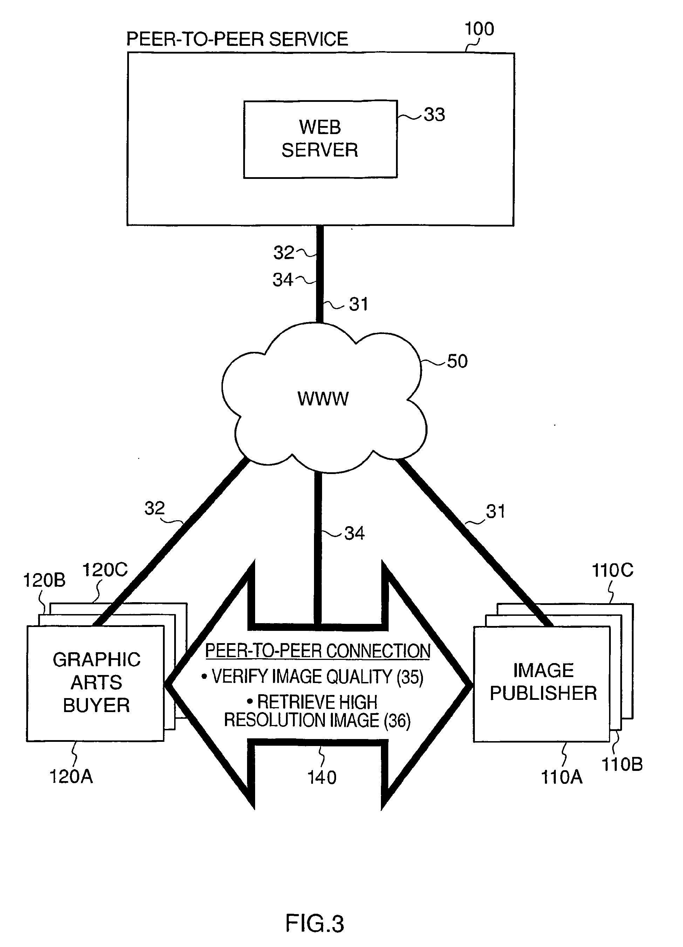

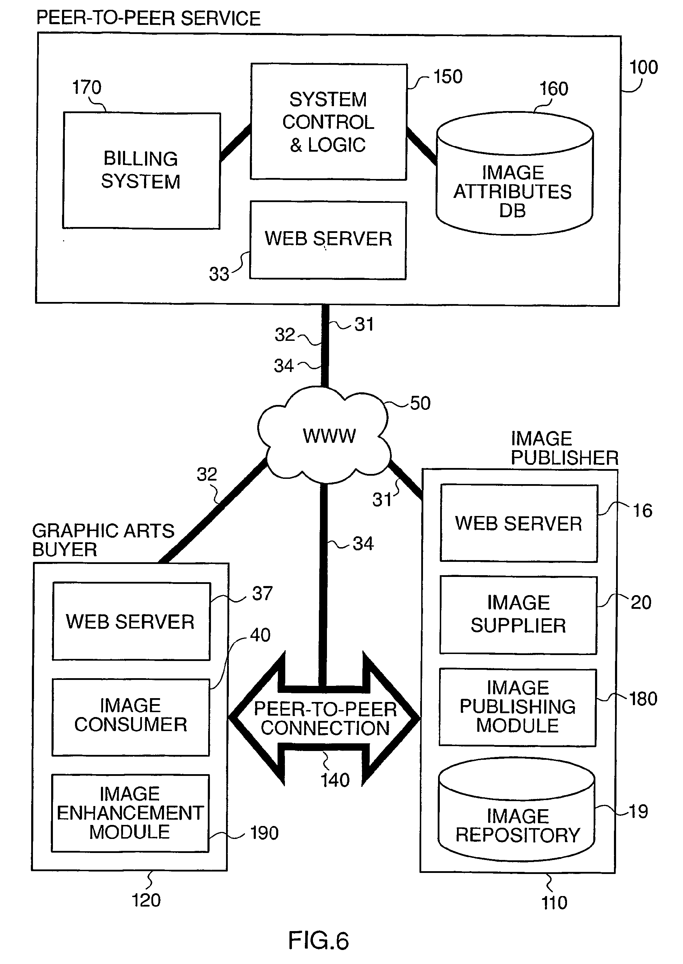

The invented Peer-to-Peer system, as schematically described in Fig. 3 and detailed in Fig. 6, solves most of the above mentioned problems existing in the present known solutions while offering new features, which are of prime importance to the Graphic arts Buyer.

The Peer-to-Peer service 100 is a hub type unit located on a web-server 33,connected to the Internet 50, having adequate bandwidth for up-loading and down- loading metadata and *Thumbnail* images.

Image Publishers 110 (for example a museum) incorporate Image Suppliers 20 (for example, the museum's different departments), an image repository and additional software modules to be further explained later. The Image Publishers 110 owns rights in proprietary hi-resolution images, which are registered as *Thumbnails* by *action link 31* and published in the Peer-to-Peer service 100.

Graphic Arts Buyers 120 (for example, studios, ad-agencies, magazines) employ one or more Image Consumers 40 (for example designers) working for the same Buyer, equipped with additional software module to be further explained later. Graphic Arts Buyers 120 looking for stock images for their designs perform a search 32 for such images in the Peer-to-Peer service 100 web site. If, for example, Graphic Arts Buyer 120c finds a *Thumbnail* that meets her/his requirements, and which belongs to a certain Image Publisher 110b, an option is secured to buy rights in the chosen image and the Peer-to-Peer service 100 establishes 34 an ad-hoc Peer-to-Peer network connection 140 between the Image Publisher 110b and the Graphic Arts Buyer 120c. It assumed here that the ad-hoc network connection is physically feasible, the transmission quality is acceptable (including data transfer rate) and the security level is adequate.

The chosen hi-resolution image is transferred 36 via this connection to the Buyer, following Buyer's image quality verification 35 of the low-res and partial hi-res image and a payment procedure.

The communication means between Graphic Arts Buyers 120, Image Publishers 110 and the Peer-to-Peer service 100 can be other than the Internet, for example Intranet, and combinations of Internet, Intranet, phone and mail services for delivery of CDs or film, including, for example, the high-resolution file of the image.

The invented method and system components will be further explained now in detail.

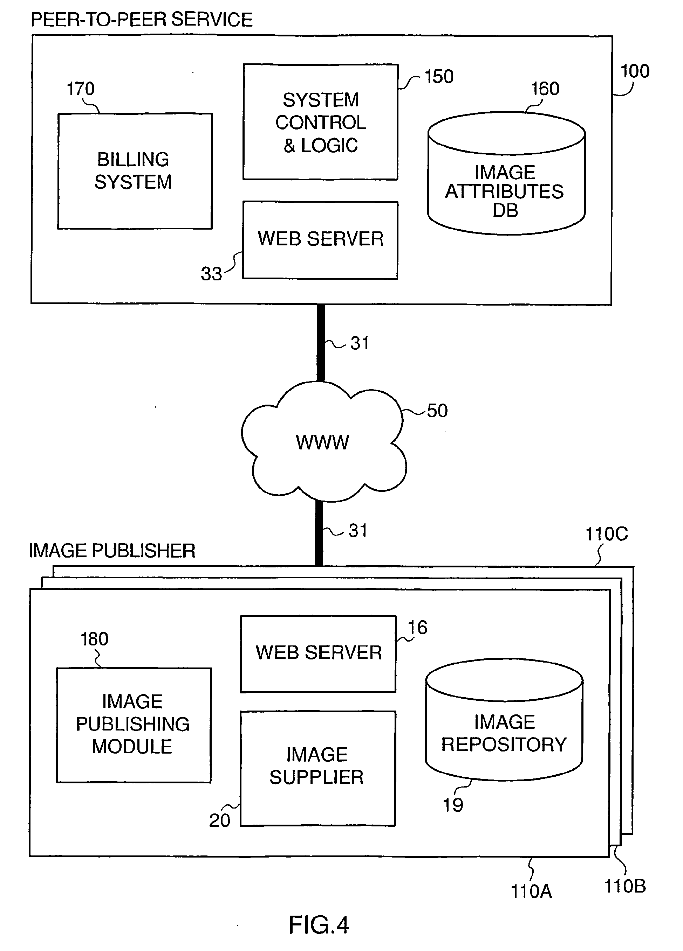

Fig. 4 is a schematic drawing of a typical layout and inter-unit workflow of the Peer-to-Peer Service unit 100 and the Image Publisher unit 110 of Fig.3.

The Peer-to-Peer service 100 comprises of 4 major units:
1. System Control & Logic unit 150, which can be a known in the art software component running on a computer server, controlling and executing all the networked and other system operations.
2. Image Attributes DB 160 - stores, in a known in the art data storage device, the following data:
   a. Attributes of the images including, for example, pointers (on the Web) to the hi-resolution images, *Thumbnails* of hi-resolution images, price information and other metadata.
   b. A list of Image Publishers 110 and their respective Internet addresses.
   c. A list of Graphic Arts Buyers 120 and their respective Internet addresses.
3. Billing System 170, which provides the billing mechanism for the stock image transactions. This system can be based on existing networked billing systems such as, for example, PayPal (eBay) from Mountain View, California.
4. Web Server 42 linking the Service to the Web 50.

Image Publishers 110, having proprietary images in their own Repository 19, and who wish to sell rights in those images, register 31 these images by uploading the image Thumbnails into the Peer-to-Peer system. For each Thumbnail a form is submitted describing the image metadata, including, for example, physical attributes, content category, textual description of the content and pricing tables.

The System Control & Logic unit 150 performs at least 3 operations:
1. Records the image attributes in the Image Attributes DB 160.
2. Records the Image Publisher's 110 network details into the Image attributes DB 160.
3. Records the Image Publisher's 110 necessary account details into the Billing System 170.
4.
   If the Image Publisher 110 is a new user of the system, the Image Publisher downloads the Image Publishing Module 180 into its own computer system (not shown). The function of the Image Publishing Module will be further explained later.

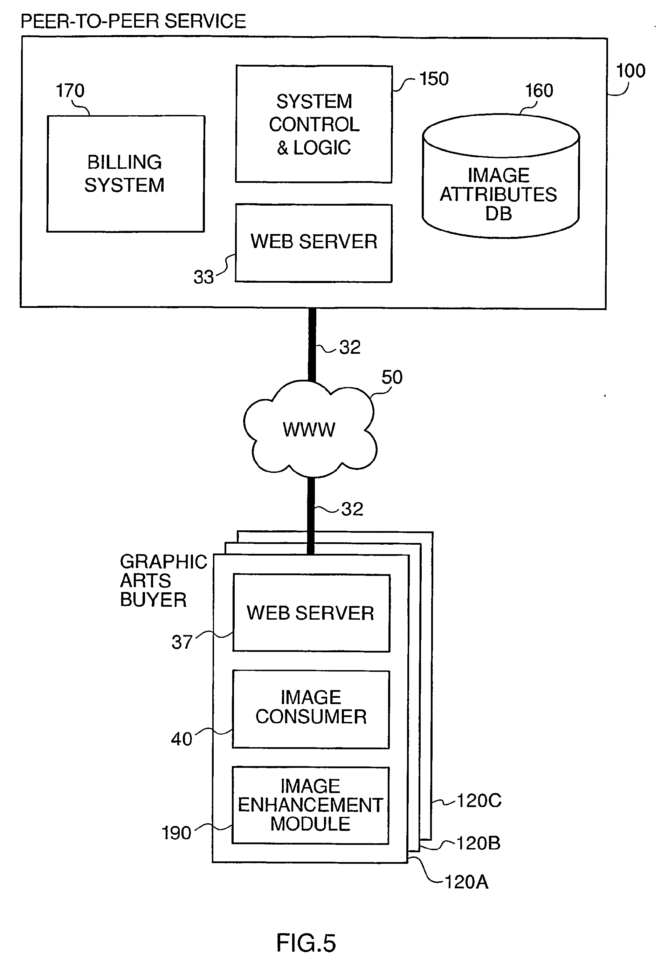

Fig. 5 is a schematic drawing of a typical layout and inter-unit workflow of the Peer-to-Peer Service unit and the Graphic Arts Buyer 120, which explains how an Image Consumer 40 finds a particular stock image in the system.

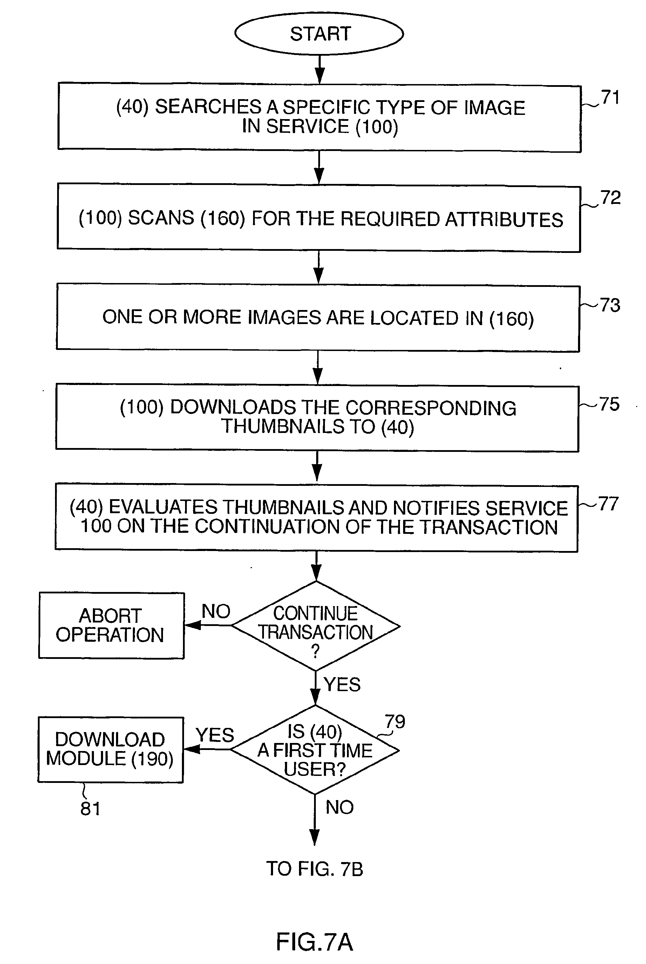

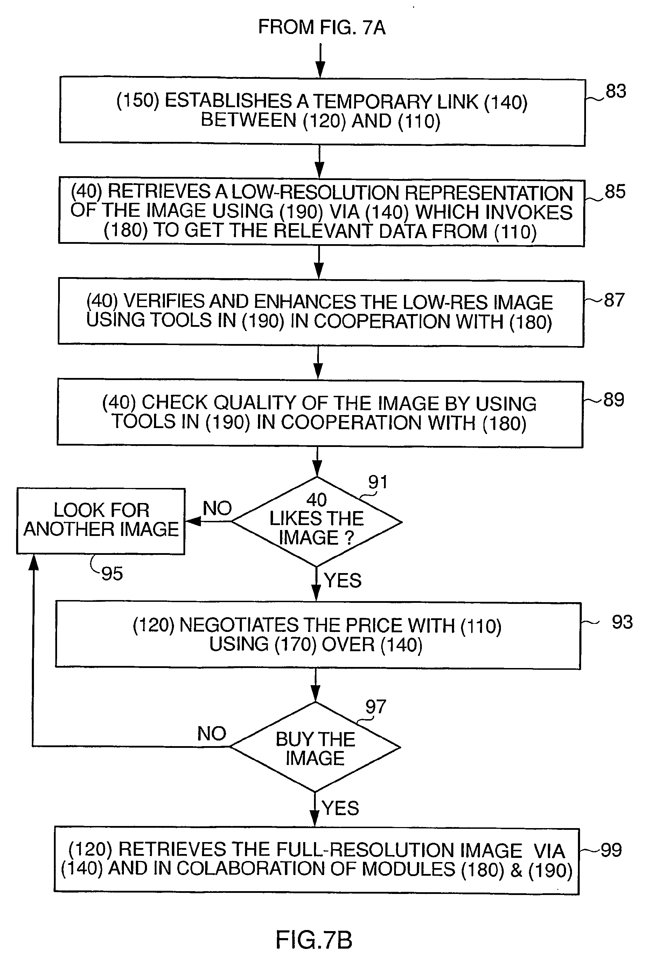

Image Consumer 40, who looks for particular images, searches 32 for such images in the Peer-to-Peer Service's web site 33, which prompts the System Control & Logic unit 150 to look in the Image Attributes DB 160 for the particular image, according to search properties entered by the Image Consumer 40. If such image/s are located, the Service 100 displays the respective *Thumbnails* to Image Consumer 40. If one or more of the Thumbnails are acceptable to the Consumer, a purchase option is opened, and the Service 100 establishes an ad-hoc *peer-to- peer* connection between the Image Buyer 120 and the Image Publisher 110 (as explained later in Fig.6) for the purpose of closer examination of the corresponding low-res files and quality evaluation of parts of the hi-res files. Upon successful conclusion of the procedure, to be further explained in Fig. 7, the transaction is concluded and the hi-res files are transferred to the Consumer.

If the Graphic Arts Buyer 120 is a new User of the system, the Image Consumer 40 downloads the Image Enhancement Module 190 into its own computer system (not shown). The function of the Image Enhancement Module will be further explained later.

For best understanding the typical Peer-to Peer system's workflow, to be further explained in Fig. 7, some additional features and capabilities of specific modules will be discussed in Fig. 6, which is a schematic drawing of a typical layout and inter-unit workflow of the Peer-to-Peer Service unit, Image Publisher units and Graphic Arts Buyer units operating as a coherent system.
1. The Peer to Peer Service unit (100) offers several additional functions:
   - Grading of images by the Graphic Arts Buyers (120), for example: image quality, communication quality, and the service quality.
   - Grading of images by the System Control & Logic unit 150, for example: image quality as evaluated by an expert, and/or by scientific tools; statistical and objective evaluation of the communication quality, and statistics on availability of images.
   - Segmentation of the images in terms of preference of colors (for example, Japanese Consumers prefer saturated colors and specific skin tones).
      Another segmentation factor is the output resolution needed by the image Consumer 40, for example: Consumer 40 prefers to output on wide-format printers, thus requiring ultra high-resolution images.
      This segmentation is recorded in the Attributes DB160, and will eventually effect the low-resolution representation examined by the Consumer, as well as the resulting high-resolution file transferred from the Publisher to the Consumer.
2. The Billing System 170 includes, beyond the known in the art payment processing tools and transaction detail logging, the mechanism to split on-line payments by the Buyer 120 to the different eligible parties (for example: the image Publisher 110 and the service100).
3. The Publisher's Image Repository 19 usually stores the low-resolution image of each proprietary image offered for sale, and one or more high-resolution files (for example having different resolutions).
4. The Image Publishing Module (180), is primarily responsible for the task of exporting the low-resolution and high-resolution image (or specific parts thereof) from the Publisher's repository 19 to the Buyer's Enhancement Module 190, using the ad-hoc *peer-to peer link* 140, but offers several additional functions:
   - Scaling the image according to the Buyer's parameters, by known-in-the-graphics-arts methods.
   - Cropping, by known-in-the- graphics-arts methods, the high-resolution image and transferring over the network connection 140 only the relevant parts of the image.
   - Embossing or removing, by known in the art methods, an "Electronic
      Signature" or Watermark" to the images for copyright protection purposes.
   - Compressing the original file using known-in-the-art methods for loss-less compression.
   - Embedding metadata into the image file.
5. The Image Enhancement Module (190), is primarily responsible for the task of importing the low-resolution and high-resolution image (or specific parts thereof) from the Image Publishing Module 180, using the ad-hoc *peer-to peer link* 140, but offers several additional functions:
   a) Enhancement and preparation of the image, for inclusion in the designed page; this is performed on the low-resolution representation of the image.
      This function includes, for example, known in the art tools for scaling and cropping the image. The same functions will be subsequently carried out, as further explained later, by the Publishing unit 180 on the hi-resolution image file, before delivery to the Consumer.
      The enhancement function includes other known in the art tools such as, for example, toning, sharpening, color correction and color conversion. These tools help to prepare the image printing on a specific printer. The resulting enhancement details of the low-resolution image will, in case the transaction is completed, be automatically performed, as further explained later, by the Image Enhancement unit 190 on the delivered high-resolution file.
   b) Embedding the elected and enhanced low-resolution image/s in the layout of the job at hand without having the ready to print Hi-res image. The resulting embedding details of the low-resolution image/s will, in case the transaction is completed, be automatically performed (by the Image Enhancement unit 190) on the delivered raw high-resolution file/s, e.g. toning and color conversion. A similar DTI Workflow automatic feature was published on the Creo website
      < http://www.creo.com/global/products/scanning_systems/color_scanners/scanner _applications_accessories/oXYgen_digital_transparency/default.htm >
   c) Image quality verification, an essential phase in the entire workflow. The verification phase consists of 2 main operations:
      ■ Maximum details: viewing high-resolution chosen parts of the image.
      ■ Output simulation: viewing the image as if processed on the target output device (e.g. proofer, printer).
These two functions are further described hereby:

### Maximum Details function

Every professional graphic arts application (for example: oXYgen by Creo IL Ltd. Herzelia, Israel) enables the user to view parts of a high-resolution image on the screen. The main difference here is that in this invention the operation is carried out over the network, a technology facilitated by, for example, Synapse Insite, another of Creo's applications.

### Output Simulation function

This functionality enables a user to view an image as if it was printed on a specific output device. In particular, applications such as Creo's oXYgen, can simulate, for example, a RGB image (on a calibrated RGB monitor) as if was printed on a specific CMYK printer. This is achieved by using the appropriate ICC profiles in a proprietary color transformation method included in oXYgen. The same function will be subsequently carried out, as explained above, by the Image Enhamcement unit 190 on the full hi-resolution image file, before delivery to the Consumer.

Fig. 7 is a block diagram of a typical operational workflow of the Peer-to-Peer system, schematically shown in Fig. 6, following the main steps of a transaction between the Image Publisher 110 and the Graphic Arts Buyer 120, who wishes to purchase a stock image from that Publisher.
In Fig. 7 numbers in parenthesis (XXX) stand for the corresponding related entity described in the task.
It is further assumed that one or more Image Publishers 110 have registered their proprietary images with the Peer-to-Peer Service 100, as explained above.
**Task 71.** Consumer 40 searches 32 a specific type of image in Service 100.
**Task 72.** Service 100 scans for the required type in Image Attributes DB 160.
**Task 73.** Assuming one or more images are located, Service 100 displays (Task 75) to Consumer 40 the *Thumbnails* corresponding to the located images.
**Task 77.** Consumer 40 evaluates the *Thumbnails* and notifies Service 100 about his interest to continue the transaction. In this stage the Consumer can consult available grading information available by the Service.
**Task 79.** If positive, Peer-to-Peer service 100 checks if Consumer 40 is a first time Buyer, and in such case downloads (Task 81) to Consumer 40 an Image Enhancement Module 190.
**Task 83.** The System Control & Logic unit 150 establishes an ad-hoc *peer-to- peer link* 140 between Buyer 120 and the specific Image Publisher 110, who owns the located images (of Task 73). In order to do so, the System Control & Logic 150 gets the Publisher's network details from the Images & Buyers DB 160 and the Graphic Arts Buyer 120 details from the current connection data.
Task 85. The Consumer 40 retrieves, via the ad-hoc *peer-to- peer link* 140, a low-resolution representation of the image using the Image Enhancement Module (190) in cooperation with the Image Publishing Module (180) to get the relevant data from the Image Repository 19.
**Task 87.** The Consumer 40 verifies and enhances the low-res file of the image, using the tools available in Module 190, as listed above, in cooperation with Module 180. In this stage the Consumer can, for example, make certain that the specific image fulfils her/his graphic layout requirements dictated by the job at hand. Additionally the Consumer can embed the elected image/s in the job layout, to evaluate the entire page/job.
**Task 89.** The Consumer 40 checks the quality of the image, using tools in the Image Enhancement Module (190) as listed above, in cooperation with Module 180. In this stage the Consumer can, for example, verify that the quality of the image fulfils her/his end-product appearance requirements as dictated by the job at hand.
**Task 91.** If the Consumer likes the selected and verified image, the transaction is confirmed, and
**Task 93.** The Graphic Arts Buyer 120 (of which Consumer 40 is part of) negotiates with the Image Publisher 110 the price of obtaining the (full hi-resolution) image for the planned use.
The negotiation is carried out directly on the ad-hoc *peer-to- peer link* 140, with collaboration of the Publishing Module 180 and Billing System 170.
The negotiation can include, for example, the type of use, the period of use, exclusivity to certain geographical areas or for defined market segments.
**Task 95.** If the Consumer does not like the selected and verified image, the transaction is aborted and the Consumer may ask the Service 100 to propose other images for examination (return to Task 71 or 73).
**Task 97.** Upon successful termination of the negotiation in Task 93 the Buyer 120 buys the image and pays the agreed price via the Billing System 170. In case the negotiation fails, the transaction is aborted and the Consumer 40 has the option to examine an alternative (Task 95).
**Task 99.** Once the purchase of the image (Task 97) is completed the high-resolution image is retrieved from the Image Publisher's Repository 19 in collaboration with the Image Publishing Module 180 and the Image Enhancement Module 190. At this stage the previous operations done by Consumer 40 on the low-resolution files of the selected image (Tasks 87) will be automatically implemented on the retrieved file, thus rendering the file ready for inclusion in the job and subsequently for print.

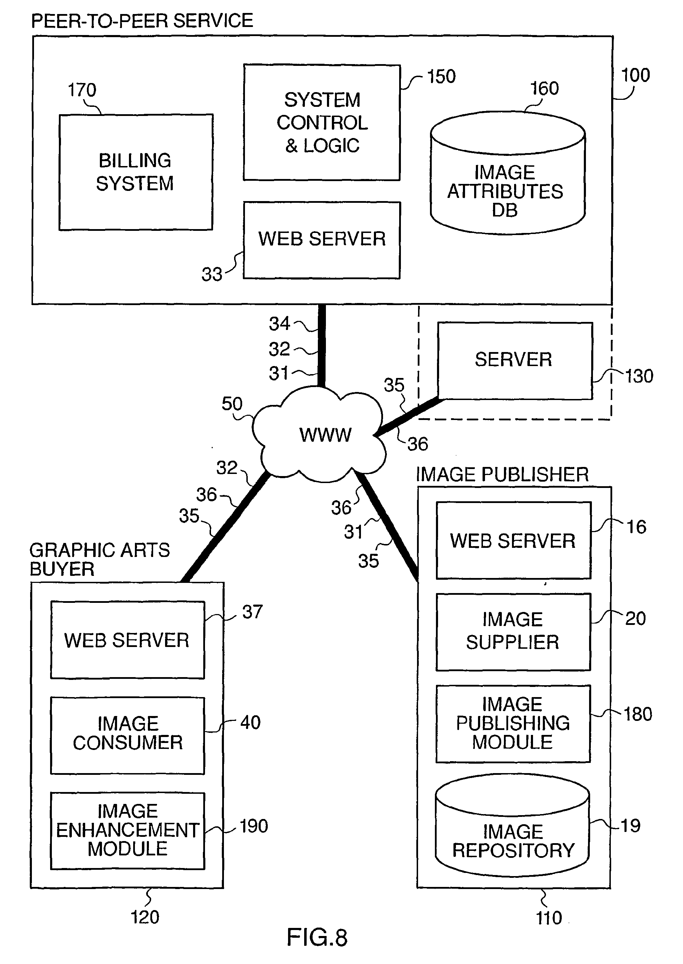

Fig. 8 is a schematic block-diagram of an alternative operational workflow of the Peer-to-Peer system, particularly useful where the direct ad-hoc *peer-to- peer link* 140 is impractical due to, for example, lack of adequate level of security, transmission quality or bandwidth. The alternative workflow is practical in the case Service 100 has access to a Server 130, having adequate communication security and quality with both Publishers 110 and Buyers 120.

The workflow of Fig. 8 is identical to the one described for Fig. 6 Fig. 7A and Fig.7B except that the ad-hoc *peer-to- peer link* 140 is replaced by a two stage network connection, namely Buyer 120 to Server 130 and Publisher 110 to Server 130. Server 130 is used for temporary storage of the low and high-resolution files transferred from Publisher 110 to Buyer 120.
The technologies and methods described in the preferred modes of this invention are known in the art of Graphic arts, Pre-Press and data communication over the Internet. Wherever specific technologies were employed, examples for such technologies were quoted.

## Claims

1. A distributed image trading system comprising:
a) at least one image publisher (110) comprising a repository (19) for high-resolution images and an image publishing module (180);
b) at least one image buyer (120) comprising an image enhancement module (190), including,
i) tools for evaluation and tools for quality verification of partial high-resolution images respectively, obtained directly from said image publisher (110),
ii) tools for rendering a high resolution image, obtained directly from said image publisher (110), ready for print on said buyer's defined output device; and
c) a system service unit (100) comprising an image attributes database (160), a search module for searching said image attributes database (160), a billing module (170), and a coordination and control module (150),
wherein said at least one image publisher (110), said at least one image buyer (120) and the system service unit (100) are in communication; and said system service unit (100) is adapted to route said at least one image buyer (120) to communicate directly with said at least one image publisher (110) upon selection in said search module of attributes of an image stored in said repository (19) of said at least one image publisher (110).

2. The system according to claim 1, wherein said image publishing module (180) comprises an image high-resolution exporting module comprising at least one of
a) a module for extracting a low-resolution image file from said high-resolution image file stored in said at least one repository (19);
b) a module for scaling and cropping said low-resolution image according to instructions received from said image buyer (120);
c) a module for embossing or removing an electronic signature on/from said low-resolution image file;
d) a module for compressing said high-resolution image file;
e) a module for embedding metadata into said low-resolution image file, and
f) combinations thereof.

3. The system according to claim 1, wherein said image publishing module (180) is provided by said system service unit (100) to said at least one image publisher (110) upon registering with said system service unit (100).

4. The system according to claim 1, wherein said image enhancement module (190) comprises:
a) tools for importing a low-resolution representation of a selected thumbnail from said image publisher (110);
b) a first group of tools comprising at least one of
i) tools for evaluating said low-resolution representation;
ii) tools for enhancing said low-resolution representation comprising at least one of toning, sharpening, color correction and color conversion;
iii) tools for embedding the selected and enhanced low-resolution image in a page layout; and
iv) combinations thereof; and
c) a second group of tools comprising:
i) tools for obtaining from said high-resolution image file, at least one of a defined partial image in maximum resolution and said low-resolution representation of the image;
ii) tools for obtaining from said high-resolution image file, at least one of a defined partial image and said low-resolution representation of the image simulated to match the output of said file on said buyer's defined particular output device; and
d) tools for importing the high-resolution representation of said low-resolution representation from said image publisher (110); and
e) tools for automatically performing the operations in said first group of tools on said imported high resolution file to render the file ready for print.

5. The system according to claim 1, wherein said image enhancement module is provided by said system service unit (100) to said at least one image buyer (120) upon registering with said system service unit (100).

6. The system according to claim 1, wherein said image attributes comprises at least one of thumbnails representing said publisher's high-resolution images, description of said image, and combinations thereof.

7. The system according to claim 6, wherein said image description comprises at least one of the publisher's identity, the actual location of said image in said publisher's repository (19), physical attributes of said image, content category to which said image belongs, textual description of the content, pricing tables, image grading and preference segmentation information and combinations thereof.

8. The system according to claim 1, wherein said communication is at least one of Internet, Intranet, and combinations thereof.

9. A buyer's method of locating and purchasing high-resolution images directly from the publisher of said images, the method comprising:
a) accessing a system service unit (100) through a network connection;
b) searching image attributes in a database (160) of said system service unit (100) and selecting desired thumbnails;
c) creating a direct network connection between said image buyer (120) and the respective image publisher (110) to enable steps (d) to (f);
d) enhancing and verifying the quality of a partial high-resolution image corresponding to said selected thumbnail by controlled accessing of said publisher's computer;
e) importing the high-resolution image from said image publisher (110); and
f) performing the operations in said step of enhancing and verifying said partial high-resolution image on said imported high-resolution image to automatically render said high-resolution image ready for print.

10. The buyer method of claim 9, wherein the step of enhancing and verifying the quality comprises the steps of:
a) importing a low-resolution representation of selected thumbnail from said image publisher (110);
b) enhancing and verifying said low-resolution representation, comprising at least one of:
i) evaluating the low-resolution representation of a selected thumbnail;
ii) enhancing said low-resolution representation including at least one of toning, sharpening, color correction and color conversion;
iii) embedding the selected and enhanced low-resolution image in a page layout; and
iv) combinations thereof; and
c) verifying the quality of said high-resolution image comprising the steps of:
i) obtaining from said high-resolution image file, a defined partial image in maximum resolution or said low-resolution representation of the image;
ii) simulating said partial image or said low-resolution representation of the image to match the output of said file on said buyer's defined particular output device.

## Patentansprüche

1. Verteiltes Bildvertriebssystem, umfassend:
a) mindestens einen Bildverleger (110), ein Datenlexikon (19) für hochauflösende Bilder und ein Bildverlagsmodul (180) umfassend;
b) mindestens einen Bildkäufer (120), ein Bildverbesserungsmodul (190) umfassend, einschließlich
i) Auswertungswerkzeuge bzw. Werkzeuge zur Qualitätsprüfung von teilweise hochauflösenden Bildern, direkt vom Bildverleger (110) beschafft,
ii) Werkzeuge, um ein direkt vom Bildverleger (110) beschafftes hochauflösendes Bild druckbereit für die definierte Ausgabeeinrichtung des Käufers zu rendern; und
c) eine Systemserviceeinheit (100), Folgendes umfassend: eine Bildattribut-Datenbank (160), ein Suchmodul zum Durchsuchen der Bildattribut-Datenbank (160), ein Abrechnungsmodul (170) und ein Koordinations- und Steuerungsmodul (150),
worin der mindestens eine Bildverleger (110), der mindestens eine Bildkäufer (120) und die Systemserviceeinheit (100) in Kommunikation sind; und die Systemserviceeinheit (100) dazu angepasst ist, den mindestens einen Bildkäufer (120) zu routen, sodass er nach dem Auswählen im Suchmodul von Attributen eines im Datenlexikon (19) des mindestens einen Bildverlegers (110) gespeicherten Bildes direkt mit dem mindestens einen Bildverleger (110) kommuniziert.

2. System nach Anspruch 1, worin das Bildverlagsmodul (180) ein Bildhochauflösungs-Exportmodul umfasst, mindestens eins der Folgenden umfassend:
a) ein Modul zum Extrahieren einer niedrigauflösenden Bilddatei aus einer im mindestens einen Datenlexikon (19) gespeicherten hochauflösenden Bilddatei;
b) ein Modul zum Skalieren und Zuschneiden des niedrigauflösenden Bilds gemäß den vom Bildkäufer (120) empfangenen Befehlen;
c) ein Modul, um eine elektronische Unterschrift auf die niedrigauflösende Bilddatei zu prägen oder aus ihr zu entfernen;
d) ein Modul zum Komprimieren der hochauflösenden Bilddatei;
e) ein Modul zum Einbetten von Metadaten in die niedrigauflösende Bilddatei, und
f) Kombinationen davon.

3. System nach Anspruch 1, worin das Bildverlagsmodul (180) von der Systemserviceeinheit (100) dem mindestens einen Bildverleger (110) nach dem Registrieren bei der Systemserviceeinheit (100) zur Verfügung gestellt wird.

4. System nach Anspruch 1, worin das Bildverbesserungsmodul (190) umfasst:
a) Werkzeuge, um vom Bildverleger (110) eine niedrigauflösende Darstellung einer ausgewählten Miniaturansicht zu importieren;
b) eine erste Werkzeuggruppe, mindestens eins der Folgenden umfassend:
i) Werkzeuge zum Auswerten der niedrigauflösenden Darstellung;
ii) Werkzeuge zum Verbessern der niedrigauflösenden Darstellung, mindestens eins der Folgenden umfassend: Tonung, Schärfung, Farbkorrektur und Farbkonversion;
iii) Werkzeuge zum Einbetten des ausgewählten und verbesserten niedrigauflösenden Bilds in ein Seitenlayout; und
iv) Kombinationen davon; und
c) eine zweite Werkzeuggruppe, umfassend:
i) Werkzeuge, um von der hochauflösenden Bilddatei mindestens eins der Folgenden zu beschaffen: ein definiertes Teilbild mit maximaler Auflösung und die niedrigauflösende Darstellung des Bilds;
ii) Werkzeuge, um von der hochauflösenden Bilddatei mindestens eins der Folgenden zu beschaffen: ein definiertes Teilbild und die niedrigauflösende Darstellung des Bilds, das simuliert ist, um auf die Ausgabe der Datei auf der definierten bestimmten Ausgabeeinrichtung des Käufers abgestimmt zu sein; und
d) Werkzeuge zum Importieren der hochauflösenden Darstellung der niedrigauflösenden Darstellung aus dem Bildverleger (110); und
e) Werkzeuge zum automatischen Anwenden der Operationen in der ersten Werkzeuggruppe auf die importierte hochauflösende Datei, um die Datei druckbereit zu rendern.

5. System nach Anspruch 1, worin das Bildverbesserungsmodul von der Systemserviceeinheit (100) dem mindestens einen Bildkäufer (120) nach dem Registrieren bei der Systemserviceeinheit (100) zur Verfügung gestellt wird.

6. System nach Anspruch 1, worin die Bildattribute mindesten eins der Folgenden umfassen: Miniaturansichten, die die hochauflösenden Bilder des Verlegers darstellen, eine Beschreibung des Bilds und Kombinationen davon.

7. System nach Anspruch 6, worin die Bildbeschreibung mindestens eins der Folgenden umfasst: die Verlegeridentität, die tatsächliche Position des Bilds im Datenlexikon (19) des Verlegers, physikalische Attribute des Bilds, die Inhaltskategorie, zu der das Bild gehört, die Textbeschreibung des Inhalts, Preistabellen, Bildgradations- und Präferenzsegmentierungsinformation und Kombinationen davon.

8. System nach Anspruch 1, worin die Kommunikation mindestens eins der Folgenden ist: Internet, Intranet und Kombinationen davon.

9. Käuferverfahren zum Auffinden und Kaufen von hochauflösenden Bildern direkt vom Verleger der Bilder, das Verfahren Folgendes umfassend:
a) Zugriff auf eine Systemserviceeinheit (100) durch eine Netzverbindung;
b) Suchen von Bildattributen in einer Datenbank (160) der Systemserviceeinheit (100) und Auswählen von gewünschten Miniaturansichten;
c) Erzeugen einer direkten Netzverbindung zwischen dem Bildkäufer (120) und dem jeweiligen Bildverleger (110), um die Schritte (d) bis (f) zu aktivieren;
d) Verbessern und Verifizieren der Qualität eines teilweise hochauflösenden Bilds, das der ausgewählten Miniaturansicht entspricht, durch gesteuerten Zugriff auf den Computer des Verlegers;
e) Importieren des hochauflösenden Bilds vom Bildverleger (110); und
f) Anwenden der Operationen im Schritt des Verbesserns und Verifizierens des teilweise hochauflösenden Bilds auf das importierte hochauflösende Bild, um das hochauflösende Bild automatisch druckfertig zu rendem.

10. Käuferverfahren nach Anspruch 9, worin der Schritt des Verbesserns und Verifizierens der Qualität folgende Schritte umfasst:
a) Importieren einer niedrigauflösenden Darstellung einer ausgewählten Miniaturansicht aus dem Bildverleger (110);
b) Verbessern und Verifizieren der niedrigauflösenden Darstellung, mindestens eins der Folgenden umfassend:
i) Auswerten der niedrigauflösenden Darstellung einer ausgewählten Miniaturansicht;
ii) Verbessern der niedrigauflösenden Darstellung, mindestens eins der Folgenden umfassend: Tonung, Schärfung, Farbkorrektur und Farbkonversion;
iii) Einbetten des ausgewählten und verbesserten niedrigauflösenden Bilds in ein Seitenlayout; und
iv) Kombinationen davon; und
c) Verifizieren der Qualität des hochauflösenden Bilds, folgende Schritte umfassend:
i) Beschaffen eines definierten Teilbilds mit maximaler Auflösung oder der niedrigauflösende Darstellung des Bilds von der hochauflösenden Bilddatei;
ii) Simulieren des Teilbilds oder der niedrigauflösenden Darstellung des Bilds, um die Ausgabe der Datei auf die definierte bestimmte Ausgabeeinrichtung des Käufers abzustimmen.

## Revendications

1. Système d'échange d'images distribué comportant :
a) au moins un éditeur d'images (110) comportant un référentiel (19) pour des images haute résolution et un module d'édition d'images (180) ;
b) au moins un acheteur d'images (120) comportant un module d'amélioration d'images (190), comportant,
i) des outils d'évaluation et des outils de vérification de la qualité d'images haute résolution partielles, respectivement, obtenues directement à partir dudit éditeur d'images (110),
ii) des outils pour rendre une image haute résolution, obtenue directement à partir dudit éditeur d'images (110), prête pour une impression sur ledit dispositif de sortie défini de l'acheteur, et
c) une unité de service de système (100) comportant une base de données d'attributs d'images (160), un module de recherche pour la recherche dans ladite base de données d'attributs d'images (160), un module de facturation (170), et un module de commande et de coordination (150),
dans lequel ledit au moins un éditeur d'images (110), ledit au moins un acheteur d'images (120) et l'unité de service de système (100) sont en communication ; et dans lequel ladite unité de service de système (100) est adaptée pour acheminer ledit au moins un acheteur d'images (120) afin qu'il communique directement avec ledit au moins un éditeur d'images (110) lors de la sélection, dans ledit module de recherche, d'attributs d'une image stockée dans ledit référentiel (19) dudit au moins un éditeur d'images (110).

2. Système selon la revendication 1, dans lequel ledit module d'édition d'images (180) comporte un module d'exportation d'images haute résolution comportant au moins l'un parmi :
a) un module pour extraire un fichier d'images basse résolution à partir dudit fichier d'images haute résolution dans ledit au moins un référentiel (19) ;
b) un module pour mettre à l'échelle et cadrer ladite image basse résolution selon des instructions reçues de l'acheteur d'images (120) ;
c) un module pour ciseler ou supprimer une signature électronique sur/depuis ledit fichier d'images basse résolution ;
d) un module pour compresser ledit fichier d'images haute résolution ;
e) un module pour intégrer des métadonnées dans ledit fichier d'images basse résolution, et
f) toutes les combinaisons des modules ci-dessus.

3. Système selon la revendication 1, dans lequel ledit module d'édition d'images (180) est fourni par ladite unité de service de système (100) audit au moins un éditeur d'images (110) lors de l'enregistrement avec ladite unité de service de système (100).

4. Système selon la revendication 1, dans lequel ledit module d'amélioration d'images (190) comporte :
a) des outils pour importer une représentation basse résolution d'un instantané sélectionné à partir de l'éditeur d'images (110) ;
b) un premier groupe d'outils comportant au moins l'un parmi :
i) des outils pour évaluer ladite représentation basse résolution ;
ii) des outils pour améliorer ladite représentation basse résolution comportant au moins l'un parmi un virage, une définition des contours, une correction des couleurs et une conversion de couleurs ;
iii) des outils pour intégrer l'image basse résolution améliorée et sélectionnée dans une mise en page, et
iv) les combinaisons de cela ; et
c) un second groupe d'outils comportant :
i) des outils pour obtenir à partir du fichier d'images haute résolution, au moins une d'une image partielle définie en résolution maximale et de ladite représentation basse résolution de l'image ;
ii) des outils pour obtenir à partir dudit fichier d'images haute résolution, au moins une d'une image partielle définie et de ladite représentation basse résolution de l'image simulée pour une correspondance avec la sortie dudit fichier sur ledit dispositif de sortie particulier défini de l'acheteur ; et
d) des outils pour importer la représentation haute résolution de ladite représentation basse résolution à partir dudit éditeur d'images (110) ; et
e) des outils pour exécuter automatiquement les opérations dans ledit premier groupe d'outils sur ledit fichier haute résolution importé pour rendre le fichier prêt pour une impression.

5. Système selon la revendication 1, dans lequel ledit module d'amélioration d'images est fourni par ladite unité de service de système (100) audit au moins un acheteur d'images (120) lors de l'enregistrement avec ladite unité de service de système (100).

6. Système selon la revendication 1, dans lequel lesdits attributs d'image comportent au moins l'un parmi des instantanés représentant les images haute résolution dudit éditeur, une description de ladite image, et les combinaisons de cela.

7. Système selon la revendication 6, dans lequel ladite description d'image comporte au moins un élément parmi l'identité de l'éditeur, l'emplacement en cours de ladite image dans ledit référentiel de l'éditeur (19), des attributs physiques de ladite image, une catégorie de contenus à laquelle appartient ladite image, une description textuelle du contenu, des tables de tarification, un classement d'images et des informations de préférence de segmentation et toutes les combinaisons de cela.

8. Système selon la revendication 1, dans lequel ladite communication est au moins l'une parmi Internet, l'intranet, et les combinaisons de cela.

9. Procédé d'acheteur pour localiser et acheter des images haute résolution directement à partir de l'éditeur desdites images, le procédé comportant les étapes consistant à :
a) accéder à une unité de service de système (100) via une connexion de réseau ;
b) rechercher des attributs d'images dans une base de données (160) de ladite unité de service de système (100) et sélectionner des instantanés désirés ;
c) créer une connexion de réseau directe entre ledit acheteur d'images (120) et l'éditeur d'images respectif (110) pour permettre les étapes (d) à (f) ;
d) améliorer et vérifier la qualité d'une image haute résolution partielle correspondant audit instantané sélectionné par un accès commandé de l'ordinateur dudit éditeur ;
e) importer l'image haute résolution à partir dudit éditeur d'images (110) ; et
f) exécuter les opérations dans ladite étape d'amélioration et de vérification de ladite image haute résolution partielle sur ladite image haute résolution importée pour rendre automatiquement ladite image haute résolution prête pour une impression.

10. Procédé d'acheteur selon la revendication 9, dans lequel l'étape d'amélioration et de vérification de la qualité comporte les étapes consistant à :
a) importer une représentation basse résolution d'un instantané sélectionné à partir dudit éditeur d'images (110) ;
b) améliorer et vérifier ladite représentation basse résolution, avec au moins une étape consistant à:
i) évaluer la représentation basse résolution d'un instantané sélectionné ;
ii) améliorer ladite représentation basse résolution comportant au moins l'un parmi un virage, une définition des contours, une correction des couleurs et une conversion de couleurs ;
iii) intégrer l'image basse résolution améliorée et sélectionnée dans une mise en page ; et
iv) les combinaisons de cela ; et
c) vérifier la qualité de ladite image haute résolution au moyen des étapes consistant à :
i) obtenir à partir du fichier d'images haute résolution, une image partielle définie en résolution maximale ou ladite représentation basse résolution de l'image ;
ii) simuler ladite image partielle ou ladite représentation basse résolution de l'image pour une correspondance avec à la sortie dudit fichier sur ledit dispositif de sortie particulier défini de l'acheteur.
